# EUROPÄISCHE PATENTSCHRIFT

(11) **EP 3 413 120 B1**
(45) Veröffentlichungstag und Bekanntmachung des Hinweises auf die Patenterteilung: **22.12.2021**
(21) Anmeldenummer: 18170883.5
(22) Anmeldetag: 04.05.2018
(51) Int. Cl.: G02C 5/18, B33Y 80/00, B29C 64/35, B29D 12/02

(54) **VERFAHREN ZUM HERSTELLEN VON BRILLENBÜGEL MIT EINER SEELE, DIE ROHLINGE DER BRILLENBÜGEL HERGESTELLT IN EINEM ADDITIVEN HERSTELLUNGSPROZESS, WIE ZUM BEISPIEL SELEKTIVES LASER SINTERN (SLS-"DRUCKEN") UND DERGESTALT HERGESTELLTE BRILLENBÜGEL**
METHOD FOR PRODUCING OF SPECTACLE ARMS WITH A CORE, THE BLANKS OF THE SPECTACLE ARMS FORMED IN AN ADDITIVES MANUFACTURING PROCESS, SUCH AS SELECTIVE LASER SINTERING (SLS PRINTING ) AND SPECTACLE ARMS MADE USING THIS METHOD
PROCÉDÉ DE FABRICATION DE BRANCHE DE LUNETTES POURVUE D'UNE ÂME, ÉBAUCHE DE LA BRANCHE DE LUNETTES FABRIQUÉE DANS UN PROCESSUS DE FABRICATION ADDITIVE TEL QUE FRITTAGE SÉLECTIF PAR LASER (IMPRESSION PAR FSL) ET BRANCHE DE LUNETTES FABRIQUÉE SELON LEDIT PROCÉDÉ

(30) Priorität: 18.05.2017 DE 102017004766; 30.06.2017 DE 102017114687
(43) Veröffentlichungstag der Anmeldung: 12.12.2018
(73) Patentinhaber: Mierswa, Aurélien, 81543 München (DE)
(72) Erfinder: Mierswa, Aurélien, 81543 München (DE)
(74) Vertreter: Hamel, Armin

(56) Entgegenhaltungen:
- WO-A1-2017/053599
- DE-A1-102014 203 735

## Beschreibung

### Technisches Gebiet:

Die Erfindung betrifft ein Verfahren zum Herstellen von Brillenbügeln mit einer Seele, wie Metallkern, wobei die Rohlinge der Brillenbügel in einem additiven Herstellungsprozess, wie z.B. Selektives Laser Sintern (SLS), unter Verwendung eines hierfür geeigneten Kunststoffes als Herstellungssubstrat hergestellt ("gedruckt") werden, gemäß dem Oberbegriff des Anspruchs 1.

### Stand der Technik:

Durch die DE 201010001101 ist ein Verfahren zur Herstellung von Laser-gesinterten Kunststoffgegenständen - man spricht hier vom Drucken eines Kunststoffgegenstandes durch das Selektive Laser-Sintern (SLS) - bekannt geworden, wobei man danach die folgenden Schritte ausführt: a) Glätten der Oberflächen der Kunststoffgegenstände; b) Waschen der geglätteten Kunststoffgegenstände; c) Färben der Kunststoffgegenstände und d) Versiegeln und/oder Imprägnieren der Oberflächen der Kunststoffgegenstände. Der Kunststoffgegenstand wurde dabei durch Lasersintern aus Polyamid oder Polystyrol oder Glaskugel- oder Carbonfaser-gefülltem Polyamid, Polyamid 11, Polyamid 12, Polystyrol, Polypropylen oder deren Mischungen erzeugt. Bevorzugt sind derartige Laser-gesinterten Kunststoffgegenstände Bestandteile eines Brillengestells, Schmuckstücks, Lampenschirms oder Schreibgeräts.

Durch die JP2009003399A ist ein aus Harz bestehender Brillenbügel mit einem mittels eines Sprengverfahrens hergestellten Kern bekannt geworden, wobei der Brillenbügel mehrere dreidimensionale Durchgangslöcher als Verzierungen quer zur Bügellängsachse aufweist. Diese Durchgangslöcher sind durch einen Ornamentstempel ausgestempelt worden, um den Hintergrund hinter dem Bügel von der Vorderseite aus deutlich sichtbar zu machen. Ebenso ist es bekannt, dass derartige Gegenstände, insbesondere, wenn sie filigran hergestellt sind, nach der Entnahme aus dem 3D-Drucker mit einem Sandstrahl von anhaftendem Pulver gereinigt und auch geglättet werden, also mit Druckluft, die Sand enthält.

Die WO 2017/053599 A1 beinhaltet ein Verfahren zum Herstellen von Brillenbügeln mit einer Seele, wie Metall- oder Kunststoffkern, wobei die Rohlinge der Brillenbügel in einem additiven Herstellungsprozess, wie z.B. Selektives Laser Sintern, unter Verwendung eines hierfür geeigneten pulverförmigen Kunststoffes als Herstellungssubstrat hergestellt werden. Während des Herstellungsprozesses (Druckprozess) des Bügelrohlings wird innerhalb desselben ein länglicher Kanal längs der Längsachse des Bügelrohlings eingeformt (mitgedruckt), wobei das im Kanal befindliche lose Pulver, welches aufgrund des Herstellungsprozesses im Kanal verblieben ist, durch Ausblasen des Kanals mittels Druckluft aus dem Kanal entfernt wird. Anschließend wird die Seele in den Kanal eingeführt, zum Beispiel eingeschossen.

### Nachteile des Standes der Technik:

Herkömmliche Brillenbügel bestehen meistens aus Acetat; wobei in den Rohling des Bügels ein Metallkern (Seele) eingeschossen wird. Dafür wird das Acetat meist erwärmt. Acetat ist bereits bei niedrigen Temperaturen leicht verformbar; es bekommt schnell eine Textur wie Knete bzw. Teig. Daher eignet es sich hervorragend zum Einschießen eines Metalldrahts und deshalb zur Herstellung von Brillenbügeln. Nach dem Einschießen des Metallkerns wird der Rohling - nunmehr Bügel mit Metallkern - weiterverarbeitet und zwar zum Beispiel durch Bearbeitungsschritte wie Konturfräsen und Ablängen.

Beispiele befinden sich in der Veröffentlichung von MYKITA vom 30.09.2013: Making of a MYKITA Acetate frame (Siehe Mykita-Youtube-Film https://www.youtube.com/watch?v=EsaGckBC8kO, Minute 0:23) und in der Veröffentlichung von Essequadro vom 08.09.2014: Eyewear handmade in Italy, Essequadro-youtube: www.youtube.com/watch?v=dwCYMiaHWic, Minute 0:49.

Nach diesem Verfahren werden Brillenbügel der JP2005316232A hergestellt. Die Brillenbügelrohlinge dieses Standes der Technik sind somit nicht gemäß einem additiven Herstellungsprozess ("Druckprozess") erstellt worden. Auch durch die DE 2504669A1 ist ein solches Beispiel bekannt geworden, welche Brillenbügel gemäß dem vorgenannten Verfahren ― ohne additiven Herstellungsprozess ― hergestellt sind.

Die Anordnung einer Seele ― wie Metallkern, vorzugsweise in Form eines Metalldrahtes - in einem Brillenbügel besitzt erhebliche Vorteile. Der Metallkern bzw. Metalldraht im Inneren des Bügels ermöglicht eine leichtere Anpassung des Bügels an den Kopf des Kunden. Zum Anpassen wird das Material des Bügels - normalerweise Acetat oder ein im Verhalten ähnliches Material - erwärmt, damit sich das Material des Bügels biegen lässt und nicht zu brechen droht. Wird das Material des Bügels nicht erwärmt so droht es, speziell mit zunehmendem Alter, spröde zu werden und zu brechen. Beim Erwärmen und Verformen des Materials des Bügels übernimmt die Seele die statische Stabilität. Somit lässt sich ein Metalldraht als Seele im Innern des Bügels leicht in die gewünschte Form bringen und damit natürlich auch das Material des Bügels. Das weiche Material des Bügels besitzt in diesem Zustand kaum noch statische Eigenschaften. Erst nach dem Abkühlen härtet das Material wieder aus und bleibt in der gewünschten Form. Ohne den Metalldraht wäre es viel schwerer die gewünschte Verformung zu erzielen. Das Material müsste weich gemacht werden und bis zum Erstarren in der gewünschten Form gehalten werden. Das ist in der Praxis nicht wirklich möglich, weil man den Bügel etliche Male Erwärmen und Abkühlen muss um die gewünschte Form zu erhalten.

Bisherige Brillenbügel, welche in einem additiven Herstellungsprozess ("Druckprozess") erstellt worden sind, besitzen keine Seele, weder in Form eines Metallkerns noch eines -drahtes. Die geplotteten Bügel lassen sich nur bedingt an unterschiedliche Köpfe von Kunden anpassen, was die Praxis gezeigt hat. Sollte eine Brille aus einem Material wie Polyamid von additiv hergestellten Brillen, also auch die Bügel, nicht auf Anhieb richtig passen, ist dem Kunden zu einem anderen Modell zu raten. Der Schmelzpunkt von Polyamid PA12 liegt bei 180°C ― wobei der Erweichungspunkt nur wenige Celsiusgrade darunter liegt - und ist somit wesentlich höher als derjenige von Acetat (Schmelzpunkt bei ca. 119°C). Jedoch schon bei ca. 85°C verliert Acetat seinen seidigen Glanz, der auch nach dem Abkühlen nicht mehr zurückgewonnen werden kann. Würde man den aus Polyamid gemäß einem SLS-Verfahren gefertigten Bügel auf eine Temperatur bringen, in der er sich leicht verformen ließe, würde sich der Optiker regelrecht die Finger verbrennen. Wie oben beschrieben müsste der Bügel aufgrund des fehlenden Metallkerns jedoch in Position gehalten werden, bis dieser abgekühlt und wieder erstarrt ist. Das würde nur mit geeigneten, Hitze abschirmenden Handschuhen gehen. Des Weiteren aber besteht die Gefahr der Bläschenbildung an der Oberfläche des Polyamids, falls dieses zu stark erwärmt wird. Diese Bläschen sind nicht mehr zu entfernen und somit wäre der Bügel Ausschuss.

Des Weiteren kann das Einschießen eines Metallkerns in einen additiv hergestellten Brillenbügel nicht so exakt erfolgen, wie es bei einem Bügel aus zum Beispiel Acetat der Fall ist. Beim SLS-Verfahren liegt im Vorfeld ein Pulver vor, welches während des Herstellungsverfahrens zu einem dreidimensionalen Objekt - hier ein Brillenbügel - durch den Laser erschmolzen wird. Der Bügel befindet sich nach dem Druckvorgang somit bereits in seiner späteren endgültigen Form. Er wird zwar durch Trowalisieren und Färben weiter veredelt, jedoch findet eine weitere mechanische Bearbeitung, wie Fräsen, in aller Regel nicht statt.

Es ist somit nicht möglich, beim SLS-Verfahren einen Metallkern, Seele, im Vorfeld - also vor oder während des Herstellungsverfahrens des Rohlings - in den wachsenden Rohling des Brillenbügels einzubringen. Wie vorstehend ausgeführt, ist das nachträgliche Einbringen eines Metallkerns oder -drahtes in den Kunststoff des Bügels erheblich erschwert. Würde man die Seele nachträglich einschießen bestünde die Gefahr, dass derselbe seitlich aus der Bügelwand austritt, da die Bügeldicke als solche über die Länge des Bügels variiert. Zudem ist das Material - zum Beispiel Polyamid beim SLS-Verfahren - auch im erwärmten Zustand zäher als Acetat, was das Einschießen eines Metalldrahts erheblich erschweren würde. Zudem würde eine eingeschossene Seele das Material des Polyamidbügels nach außen wölben und somit die Dicke des Bügels verändern. Dies lässt sich an der Oberfläche des Bügels erkennen und ist optisch nicht erwünscht. Würde man den Brillenbügel selbst sehr dick gestalten, so wäre dieser Effekt der Dickenveränderung des Bügels eventuell nicht mehr zu sehen. Jedoch wäre der Bügel dann umso weniger flexibel genug, um an den Kopf des Kunden angepasst werden zu können.

Das Bohren eines Kanals in den Brillenbügel nach seiner Herstellung gemäß dem SLS-Verfahren für die Einführung einer Seele ist in der Praxis nicht in vernünftiger Weise realisierbar. Die Drähte zum Einsetzen in einen Brillenbügel haben eine Dicke zwischen 1 und 2 Millimetern sowie eine Länge von mehreren Zentimetern, bis ca.14cm. Beim Bohren eines solchen Loches würde ein solch langer und dünner Bohrer Gefahr laufen zu brechen. Zudem könnte man auch in diesem Fall nicht mit Sicherheit gewährleisten, dass der Bohrer zentriert im Bügel verläuft. Das Risiko, dass der Bohrer seitlich aus der Wandung des Bügels austritt, wäre zu groß.

Eines der Probleme innerhalb eines Kanals des Bügelrohlings bei dessen Herstellung liegt in der Tatsache, dass nach dem Drucken des Bügelrohlings der in denselben eingebrachte Kanal mit losem Pulver gefüllt ist. Da der Kanal jedoch nur einen lichten Durchmesser von 1 bis 2 Millimetern besitzt, jedoch mehrere Zentimeter lang sein kann - bis 14cm Länge - kommt das Pulver nicht von allein aus dem Kanal heraus; auch festes Klopfen reicht nicht aus, um das lose Pulver zu entfernen. Eine Möglichkeit wäre das Ausbohren des Kanals mit einem Bohrer, der als solcher flexibel gestaltet sein müsste. Das funktioniert in einem begrenzten Maß, jedoch ist der Einsatz eines Bohrers nicht vernünftig, da das Pulver leicht durch die entstehende Hitze verschmelzen würde und sich dann nicht mehr richtig und vollständig entfernen ließe. Zudem müsste der Kanal möglichst gerade ausgestaltet sein, damit der Bohrer nicht Gefahr läuft durch die Wandung des Brillenbügels nach außen auszutreten. Ein solcher Bügel wäre Ausschuss, da man die Verletzung des Bügels nicht mehr vertuschen könnte.

Das Dokument WO 2017/053599 A1 offenbart die Merkmale der Oberbegriffe der Ansprüche 1 und 2. Technische Aufgabe:
Der Erfindung liegt die Aufgabe zugrunde, ein Herstellungsverfahren und einen dergestalt hergestellten Brillenbügel anzugeben, bei welchem ein Brillenbügel, der als Rohling gemäß einem SLS-Herstellungsverfahren hergestellt wird, anschließend mit einer Seele versehen werden kann.

### Technische Lösung der Aufgabe:

Diese Aufgabe wird mit den Merkmalen der unabhängigen Ansprüchen 1 und 2 gelöst.

Weitere Ausgestaltungen der Erfindung sind in den Unteransprüchen gekennzeichnet, nämlich:
Vorteilhaft wird als Blas- oder Saug- oder Druckflüssigkeitskanüle eine flexible Kanüle verwendet, die während ihres Einführens in den Kanal des Bügelrohlings und während des Ausblas- oder Absaug- oder Ausspülvorgangs der Krümmung des Kanals folgt.

In vorteilhafter Weise ist somit die schnellste und sicherste Art und Weise, aus dem Kanal das lose Pulver durch Ausblasen des Kanals mittels Druckluft oder durch Absaugen der Luft (Unterdruck) zu entfernen.

Es würde nämlich nicht ausreichen, wollte man mit einer herkömmlichen Druckluftpistole, die an eine Druckluft erzeugende Einrichtung angeschlossen ist, oder Saugluftpistole oder Flüssigkeitspistole den Kanal ausblasen oder aussaugen oder ausschwemmen. Dadurch würden nur einige wenige Millimeter des Kanals frei geblasen oder frei gesaugt oder frei geschwemmt werden. Um den Kanal rückstandsfrei zu machen, wird in vorteilhafter Weise eine Blaskanüle an die Luftdruckpistole angeschlossenen bzw. auf diese aufgesetzt. Die Kanüle kann unter fließendem Luftdruck einfach in den Kanal durch die Kanaleintrittsöffnung eingeführt werden; das lose Pulver wird dabei nach außen geblasen. Somit ist der Kanal nach dem Ausblasen von Rückständen frei und die Seele kann eingesetzt werden. Gleiches gilt für das Absaugen der Luft aus dem Kanal oder das Ausschwemmen desselben. Auch hier kann die Kanüle zum Luftabsaugen in den Kanal eingebracht und das lose Pulver abgesaugt werden.

Des Weiteren wird als Blas- oder Saugkanüle oder Druckflüssigkeit erzeugende Kanüle vorteilhaft eine flexible Kanüle verwendet, die während ihres Einführens in den Kanal des Bügelrohlings und während des Ausblas- oder Absaug- oder Ausschwemmvorgangs der Krümmung des Kanals folgt.

Der große Vorteil des Ausblasens oder Aussaugens oder Ausschwemmens des Kanals von losem Pulver mit einer flexiblen Kanüle liegt darin, dass die Kanüle niemals durch die Wandung des Bügelrohlings aus dem Kanal austreten kann. Somit lassen sich auch Brillenbügel mit einem Kanal realisieren, bei denen der Bügelrohling bereits im Herstellungsverfahren (Plotten oder Drucken) stark vorgebogen ist, somit gleichermaßen auch der jeweils darin befindliche Kanal. Mit einem Bohrer, egal wie flexible dieser gestaltet wäre, würde sich ein stark gebogener Kanal nie ausbohren lassen. Es ist kein Problem, mit einer solchen flexiblen Kanüle die Pulverreste auszublasen oder auszusaugen oder auszuschwemmen. Damit die Seele beim Einschießen in den Kanal der Krümmung desselben sicher zu folgen imstande ist, ohne seitlich aus der Wandung des Bügelrohlings auszutreten, empfiehlt es sich vorteilhaft, die Seele an ihrem Einführungsende anzuspitzen und während ihres Einführens, wie Einschießen, um die eigene Längsachse zu drehen. Die Seele wird natürlich erst nach dem Befreien des Kanals des Bügelrohlings von verbliebenem losen Pulver in denselben eingeführt, zum Beispiel eingeschossen.

Zur kompletten Fertigstellung des Bügels ist es bekannt, dass Brillenteile, auch die Bügel, mehreren Veredelungsverfahren, wie dem Trowalisieren, dem Färben und Infiltrieren, unterzogen werden. Es macht Sinn, alle Veredelungsschritte des Rohlings vor dem Einsetzten der Seele in denselben durchzuführen. Die Oberfläche der Bügelrohlinge ist direkt nach der Herstellung (SLS-Verfahren wie Plotten oder Drucken), oft offenporig und somit anfällig gegen Verschmutzungen. Solche Verschmutzungen würden später noch sichtbar bleiben, oder man müsste die Bügel vor weiteren Prozessen nochmals reinigen. Somit ist es sinnvoll, die Teile erst zu veredeln und als letzten Schritt die Seele einzusetzen. Jedoch wäre es nachteilig für einen Färbeprozess, wenn loses Pulver aus dem Kanal in die Färbeanlage geraten würde. Sollte der Bügelrohling einen offenen Kanal aufweisen, so bestände die Gefahr, dass genau das passieren könnte.

Bevorzugt befindet sich der Anfang des Kanals an dem dem Ohr entfernten Ende des Bügelrohlings stirnseitig im Bereich einer Gelenksaufnahme des Bügels zur Aufnahme eines Teils des Brillengelenks. Dort ist auch die Kanaleintrittsöffnung stirnseitig platziert. Somit ist gewährleistet, dass später nach dem Einsetzen der Seele - in diesem Fall von dem dem Ohr entfernten Ende des Bügelrohlings aus - vom Kanal nichts mehr zu sehen ist.

Zur anschließenden Realisierung des Einsetzens der Seele in den Bügelrohling kann der Kanal in weiterer Ausgestaltung der Erfindung entweder
a) an dem dem Ohr abgewandten Ende des Bügelrohlings offenbleibend eingeformt werden mit einem Verschluss des Kanals am entgegegesetzten Ende des Bügelrohlings oder
b) an dem dem Ohr zugewandten Ende offenbleibend eingeformt werden mit einem Verschluss am entgegengesetzten Ende des Bügelrohlings oder
c) an beiden Enden offenbleibend eingeformt werden oder
d) an beiden Enden mittels je eines Verschlusses aus dem
   Herstellungssubstrat verschlossen bleibend eingeformt werden und
e) anschließend in den gemäß einem der Merkmale a) oder b) oder c) hergestellten Kanal entweder durch dessen vorderes oder hinteres Ende die Seele in den Kanal eingebracht wird oder
f) bei einem gemäß Merkmal d) hergestellten Kanal wenigstens einer der Verschlüsse entfernt wird und danach die Seele in den Kanal entweder von dem dem Ohr abgewandten oder von dem dem Ohr benachbarten Ende des Bügelrohlings durch eine der Kanalöffnungen in den Kanal eingebracht wird.

Somit kann der Kanal an seinem hinteren, dem Ohr zugewandten Ende des Bügelrohlings ein Loch, Kanalöffnung, aufweisen, durch welches beim Ausblas- oder Absaug- oder Ausschwemmvorgangs das verbliebene Pulver nach außen entfernt wird. Der Kanal kann durchgehend gestaltet sein, er muss jedoch nicht durchgehend sein. Anschließend wird die Seele in den Kanal des Bügelrohlings eingebracht. Eine offen gebliebene Kanalöffnung kann vorteilhaft mit einem Kunststoffpfropfen verschlossen werden. Vorteilhaft kann somit der Kanal unmittelbar nach der Herstellung des Bügelrohlings durchgehend, also an beiden Enden offen sein, wobei nach dem Einbringen der Seele in den Bügelrohling durch das vordere, dem Ohr entfernt liegende Ende, die Kanaleintrittsöffnung, das hintere, dem Ohr benachbarte Ende des Kanals, die Kanalaustrittsöffnung, mit einem Pfropfen verschlossen werden kann. Natürlich kann der Bügelrohling auch mit wenigstens an einem oder an beiden Enden verschlossenen Kanal in bekannter Weise einem Färbeprozess unterworfen werden.

Deshalb wird in weiterer Ausgestaltung der Erfindung bei Bügelrohlingen, die einem Färbeprozess unterworfen werden sollen, die wenigstens eine Kanalöffnung vor dem Färben verschlossen und erst nach dem Färben wird mindestens einer der Verschlüsse entfernt, dann erfolgt das Befreien (Ausblasen, Aussaugen, Ausschwemmen) des Kanals von losem Pulver und anschließend wird die Seele in den Kanal eingesetzt.

In weiterer Ausgestaltung der Erfindung wird bei Bügelrohlingen, die einem Färbeprozess unterworfen werden sollen, erst nach dem Färben mindestens einer der Verschlüsse entfernt, dann erfolgt das Befreien des Kanals von losem Pulver und anschließend wird die Seele in den Kanal eingesetzt. Der Vorteil dieses erfindungsgemäßen Vorgehens liegt darin, dass aufgrund des verschlossenen Kanals zum einen kein Pulver beim Färben austreten kann, zum anderen, dass keine Färbung des Kanals, also des Inneren des Bügelrohlings, erfolgt, was für spezifische Anwendungen wünschenswert sein kann. Somit ist in vorteilhafter Weise das lose Pulver innerhalb des Kanals eingeschlossen und kann zu keiner Zeit ungewollt austreten.

Nach dem Färben wird der Verschluss des Kanals an seinem Ende oder die Verschlüsse des Kanals an dessen Enden entfernt, beispielsweise aufgebohrt. Danach kann das lose Pulver innerhalb des Kanals, wie oben beschrieben, entfernt werden.

Im Normalfall der vorteilhaften Durchführung der Erfindung wird man nach der Herstellung des Bügelrohlings mit einem Kanal denselben auch von losem Pulver ausblasen oder absaugen oder ausschwemmen, sodass der Ausblas- oder Absaug- oder Ausschwemmvorgang ebenfalls vom Plott-Dienstleister durchgeführt werden kann. Somit ist der Kanal vorteilhaft frei von losem Pulver und kann anschließend gefärbt werden, ohne das Pulver aus dem Kanal austritt. Allerdings kann in diesem Fall die Färbeflüssigkeit auch in den Kanal eintreten. Soll das Innere des Kanals nicht gefärbt werden, so muss die Kanalöffnung oder müssen die Kanalöffnungen vor dem Färbevorgang mit einem Pfropfen verschlossen werden.

In vorteilhafter weiterer Ausgestaltung des erfindungsgemäßen Verfahrens wird das Ende der Seele, mit welchem diese in den Kanal eingeführt werden soll, vorher angespitzt und die Seele wird während ihres Einbringens in den Kanal um ihre eigene Längsachse schraubenartig gedreht.

Des Weiteren wird der Anfang des Kanals des Bügelrohlings vorteilhaft auf der dem Ohr abgewandten Stirnfläche des Bügelrohlings oder parallel zu dessen Stirnfläche angeordnet. In vorteilhafter weiterer Ausgestaltung des erfindungsgemäßen Verfahrens kann als Seele zum Einbringen in den Kanal statt eines Metallkerns ein Kunststoffkern verwendet werden. Die Verwendung von Kunststoffkernen als Seele eines Brillenbügels kann für spezifische Anwendungen vorteilhaft sein. Vorteilhaft wird in einem solchen Fall ein Kunststoffkern verwendet, der aus einen harten und bruchfesten Material besteht.

Erfindungsgemäße Brillenbügel mit einer Seele, wie Kunststoff- oder Metallkern, vorzugsweise Metalldraht, wobei der Bügelrohling in einem additiven Herstellungsprozess, wie z.B. Selektives Laser Sintern (SLS), aus einem hierfür geeigneten Kunststoff hergestellt ("gedruckt") wird, sind in ihrer Herstellung durch eines der vorstehend genannten erfindungsgemäßen Herstellungsverfahren gekennzeichnet.

Des Weiteren ist in vorteilhafter die Länge der Kanüle zum Herausbringen des Pulvers im Kanal gleich oder wenig kürzer ist als die Länge des Kanals innerhalb des Bügelrohlings des Brillenbügels. Der Kanal hat über seine gesamte Länge einen gleichbleibenden lichten Durchmesser

Kurzbezeichnung der Zeichnung, in der zeigen:
- Figur 1a: eine Ansicht eines geraden Bügelrohlings,
- Figur 1b: einen Schnitt durch den Bügelrohling gemäß Figur 1a längs der Schnittlinie A-A zur Darstellung eines Kanals innerhalb des Bügelrohlings, wobei diese gestrichelte Linie gleichzeitig die Längsachse des Rohlings sowie des Kanals darstellt,
- Figur 2a: eine Ansicht eines gekrümmten Bügelrohlings,
- Figur 2b: einen Schnitt durch den Bügelrohling gemäß Figur 2a längs der Schnittlinie C-C zur Darstellung eines Kanals innerhalb des Bügelrohlings, wobei diese gestrichelte Linie gleichzeitig die Längsachse des Rohlings sowie des Kanals darstellt,
- Figur 3a: eine Ansicht eines weiteren, leicht gekrümmten Bügelrohlings,
- Figur 3b: einen Schnitt durch den Bügelrohling gemäß Figur 3a längs der Schnittlinie D-D zur Darstellung eines beidendig geschlossenen Kanals innerhalb des Bügelrohlings, wobei die gestrichelte Linie D-D gleichzeitig die Längsachse des Bügelrohlings sowie des Kanals darstellt,
- Figur 4a: eine Ansicht eines weiteren, leicht gekrümmten Bügelrohlings, der an seinem dem Ohr zugewandten Ende verschlossen ist, wobei vor dem dem Ohr abgewandten Ende eine mittels Druckluft gespeiste Blaskanüle zum Ausblasen des Kanals angeordnet ist,
- Figur 4b: einen Schnitt durch den Bügelrohling gemäß Figur 4a längs der Schnittlinie D-D, wobei die gestrichelte Linie ebenfalls gleichzeitig die Längsachse des Bügelrohlings sowie des Kanals darstellt und vor dem dem Ohr abgewandten Ende des Bügelrohlings die mittels Druckluft gespeiste Blaskanüle vor der Öffnung des Kanals sich befindet,
- Figuren 5a bis 5c: eine vereinfachte Darstellung einer Blaskanüle in verschiedenen Stellungen in Bezug auf einen von losem Pulver auszublasenden Kanal eines Bügelrohlings,
- Figuren 6a bis 6b: eine Ansicht eines weiteren, leicht gekrümmten Bügelrohlings und einen Schnitt durch denselben längs der Linie D-D, die gleichzeitig die Längsachse eines Kanals ist, wobei in beiden Figuren eine Seele vor dem dem Ohr benachbarten offenen Ende des von losem Pulver befreiten Kanals angeordnet ist zum Einschießen in den Kanal,
- Figur 6c: die in den Figuren 5a und b dargestellte Seele nunmehr in eingeschobenem Zustand in den Kanal des Bügeirohiings von dem Ohr benachbarten Ende des Kanals aus,
- Figuren 7a bis 7c: eine vereinfachte Darstellung einer Saugkanüle in verschiedenen Stellungen in Bezug auf einen von losem Pulver auszusaugenden Kanal eines Bügelrohlings und
- Figuren 8a bis 8c: eine vereinfachte Darstellung einer Kanüle mit einer Druckflüssigkeit in verschiedenen Stellungen der Kanüle in Bezug auf einen von losem Pulver auszuschwemmenden Kanal eines Bügelrohlings.

### Technische Lösungswege der Erfindung:

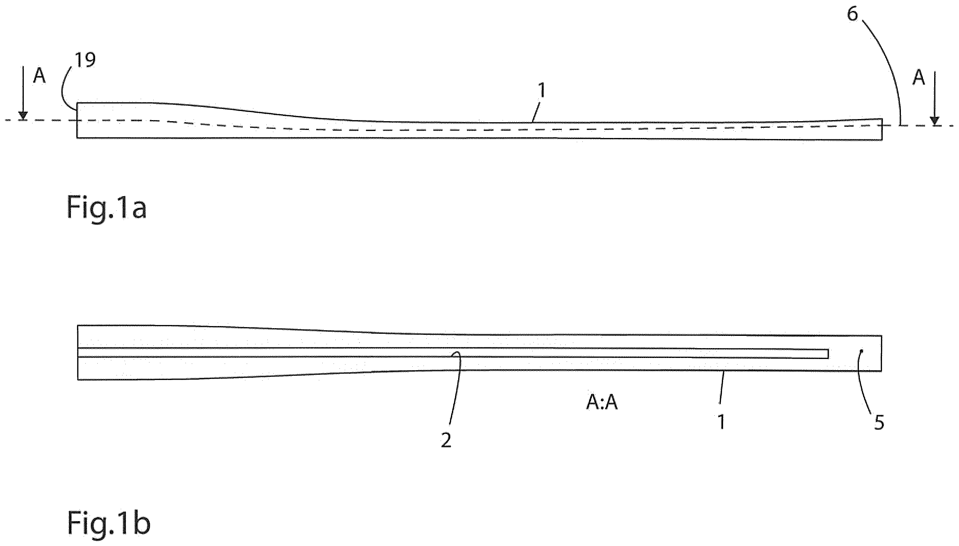

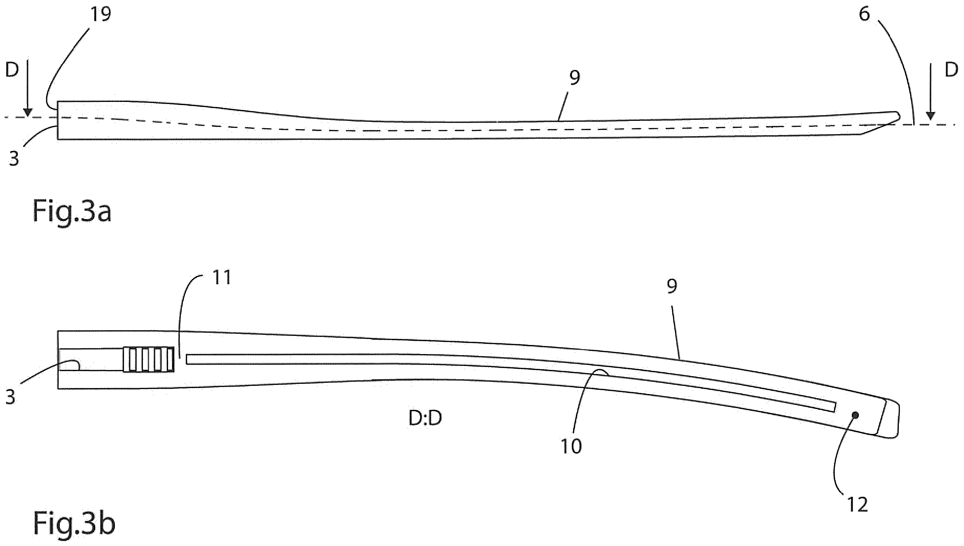

Die Figuren 1a und 1b zeigen je eine Ansicht eines geraden Bügelrohlings 1, Figur 1a, und einen Schnitt, Figur 1b, längs der Linie A-A in Figur 1a, durch den Bügelrohling nach dessen Herstellung in einem additiven Herstellungsprozess, wie z.B. Selektives Laser Sintern (SLS) und nach Herausnahme aus einem (nicht gezeigt) Drucker. Längs durch den Bügelrohling 1, vorzugsweise längs dessen Längsachse 6, verläuft ein Kanal 2 durch den Bügelrohling 1, wobei dieser Kanal 2 im Herstellungsprozess des Bügelrohlings 1 sukzessiv mit hergestellt worden ist. Gemäß den Figuren 3a und 3b geht an dem dem Ohr eines Kunden abgewandten Ende des Bügelrohlings 1 von dessen Stirnfläche 19 eine Aufnahmeöffnung 3 für ein in den Bügel einzusetzendes Gelenkteil eines Gelenks (nicht dargestellt) aus. Innerhalb dieser Aufnahmeöffnung 3 befindet sich eine Eintrittsöffnung 4 des Kanals 2, so dass dieselbe sich ebenfalls zurückgesetzt stirnseitig des Bügelrohlings 1 befindet. Wie dargestellt ist der Kanal 2 an seinem hinteren, dem Ohr eines Kunden zugewandten Ende mittels eines Verschlusses 5 oder 12 (Figur 3b) verschlossen, so dass der Kanal 2 ein längliches Sackloch ist. Der Verschluss 5, 12 kann bei der Herstellung des Bügelrohlings 1 mit demselben integral hergestellt sein; der Verschluss kann aber auch nachträglich in einen offen hergestellten Kanal als Pfropfen eingefügt worden sein.

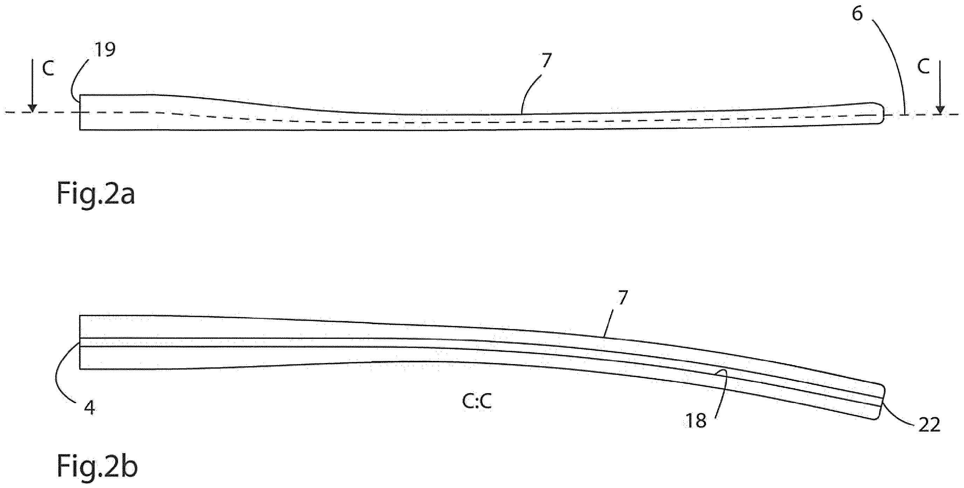

Die Figuren 2a und 2b zeigen je eine Ansicht eines gekrümmten Bügelrohlings 7, Figur 2a, und einen Schnitt, Figur 2b, durch den Bügelrohling 7 gemäß Figur 2a längs der Schnittlinie C-C, wobei diese gestrichelte Linie 6 gleichzeitig ebenfalls die Längsachse 6 des Bügelrohlings 7 darstellt. Der Bügelrohling 7 ist ― wie in den Figuren 1a und 1b ― von einem Kanal 18 durchzogen, welcher sich längs der Längsachse 6 des Bügelrohlings 7 erstreckt. Auch hier kann der Bügelrohling 7 an seinem dem Ohr des Kunden angewandten Ende eine Aufnahmeöffnung 3 (Figur 3b) für ein im Bügel anzuordnendes Gelenkteil eines Gelenks besitzen. Der Kanal 18 beginnt mit einer Kanalöffnung 4, wobei sowohl dieselbe als auch die Kanalöffnung 4 stirnseitig bezüglich des Bügelrohlings 7 angeordnet sind. Der Kanal 18 weist an dem dem Ohr zugewandten Ende des Bügelrohlings 7 eine Öffnung 22 auf; der Kanal 18 verläuft durchgehend durch den Bügelrohlings 7.

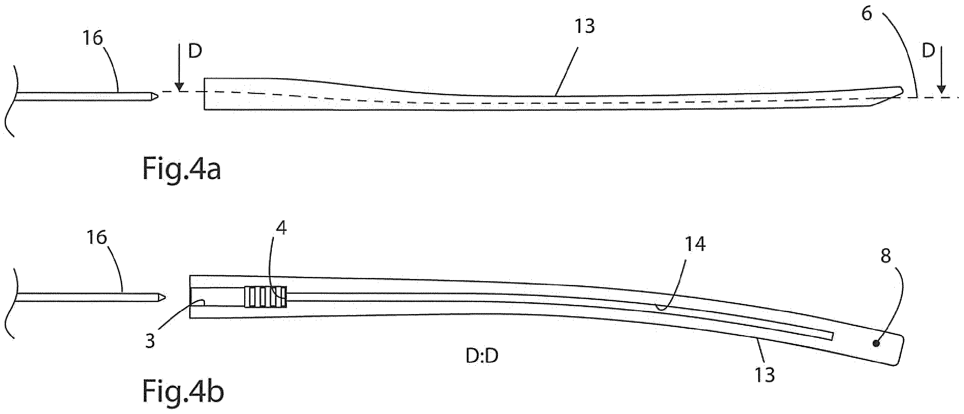

Die Figuren 3a und 3b zeigen je eine Ansicht eines leicht gekrümmten Bügelrohlings 9, der ähnlich demjenigen der Figuren 2a und 2b gestaltet ist. Im Unterschied ist hier ein Kanal 10 innerhalb des Bügelrohlings 9 beidendig mittels Verschlüsse 11, 12 verschlossen. Damit ist im Kanal 10 loses Pulver aus der Herstellung eingeschlossen. Dadurch kann der Bügelrohling 11 vor dem Einsetzen einer Seele in den Kanal 10 nunmehr unterschiedlichen Bearbeitungsschritten unterworfen werden, ohne dass im Kanal 10 von der Herstellung her befindliches Pulver nach außen treten kann. Zum Entfernen des Pulvers im Kanal 10 und nachfolgendem Einsetzen einer Seele in denselben wird anschließend einer der Verschlüsse 11, 12 geöffnet. Die Figuren 4a und 4b zeigen je eine Ansicht eines Bügelrohlings 13, der als solcher gemäß demjenigen der Figuren 1a und b, 2a und b, 3a und b ähnlich ausgestaltet ist. Ein Kanal 14 innerhalb des Bügelrohlings 13 weist an seinem dem Ohr benachbarten Ende einen Verschluss 8 auf. Vor der Stirnfläche 19 des Bügelrohlings 13 befindet sich eine Blaskanüle 16 zur Darstellung des Beginns des Ausblasvorgangs mittels Druckluft.

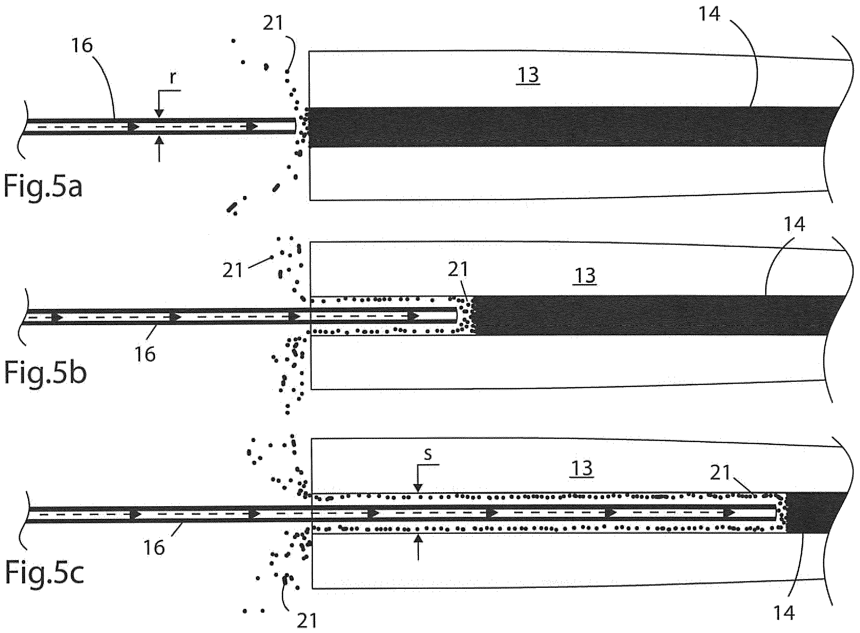

Der Ausblasvorgang des Kanals 14 des Bügelrohlings 13 mittels Druckluft aus der Blaskanüle 16 ist im Prinzip in den Figuren 5a, 5b und 5c dargestellt. Der Außendurchmesser r der Blaskanüle ist geringer als der lichte Innendurchmesser s des Kanals 14, so dass für die beiden Durchmesser gilt: r<s. Die Blaskanüle 16 wird vor eine der Öffnungen des Kanals 14 platziert.

Die Druckluft beginnt das lose Pulver 21 aus dem Kanal 14 auszublasen. Dabei fährt die Blaskanüle 16 gemäß der Figuren 5b und 5c immer weiter in den Kanal 14 ein. Die rückströmende Druckluft hält dabei das Blasrohr 16 in etwa in der Schwebe, so dass das lose oder aus einer Verdichtung im Kanal losgelöste Pulver 21 am eingefahrenen Blasrohr 16 vorbei mit der rückströmenden Druckluft ausgetragen wird.

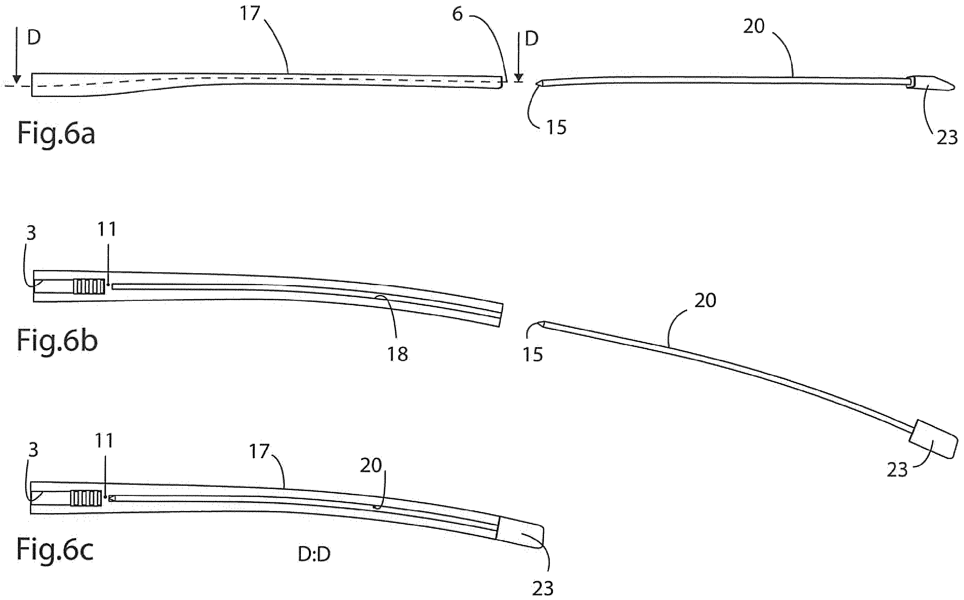

Die Figuren 6a und 6b zeigen je eine Ansicht eines weiteren, leicht gekrümmten Bügelrohlings 17 und einen Schnitt (Figur 6b) durch denselben längs der Linie D-D, die gleichzeitig die Längsachse 6 eines Kanals 18 ist, wobei jeweils eine Seele 20 vor dem dem Ohr benachbarten offenen Ende 22 des von Pulver freigeblasenen Kanals 18 angeordnet ist zum Einschießen der Seele 20 in den Kanal 18. Die Seele weist eine Spitze 15 und ein dekoratives Endstück 23 auf. Die Figur 6c zeigt die Seele 20 in nunmehr eingeschobenem Zustand in den Kanal 18 des Bügelrohlings 17 von dem dem Ohr benachbarten Ende des Kanals 18 aus, wobei das dekorative Endstück 23 der Seele 20 das Ende des Bügelrohlings 17 bzw. des Bügels dekorativ verändert. Somit kann in spezifischen Fällen eine Seele innerhalb des Bügels, wie Metallkern oder ―draht oder Kunststoffkern, auch von hinten des Bügelrohlings - also von dem dem Ohr des Kunden benachbarten Ende des Bügelrohlings - in den Bügelrohling eingeführt werden.

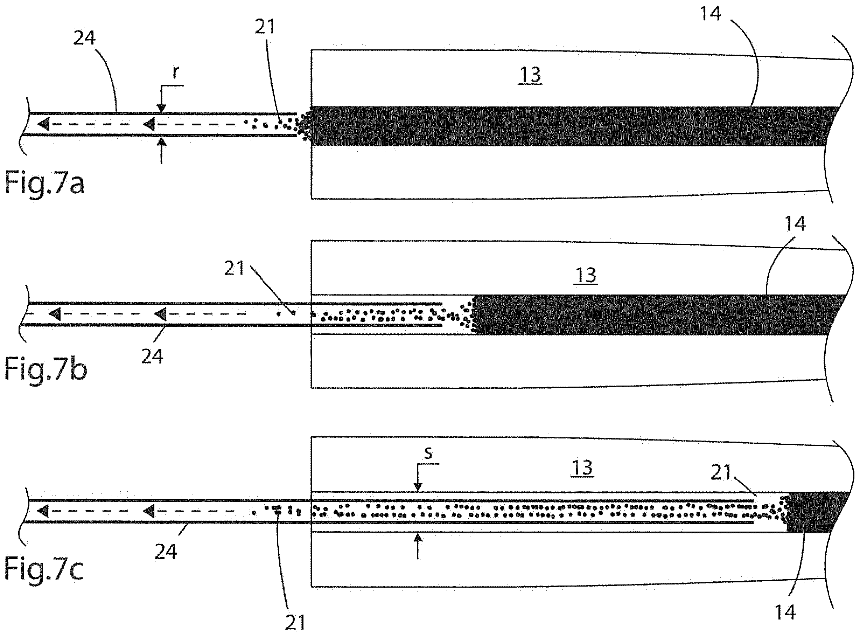

Prinzipiell kann statt Druckluft Saugluft mittels eines Unterdrucks erzeugenden Einrichtung zum Einsatz gelangen. Hierbei wird das im Kanal befindliche Pulver durch Unterdruck mittels einer in den Kanal einfahrenden Kanüle 24 aus demselben abgesaugt, was im Prinzip in den Figuren 7a bis 7c dargestellt ist. Eine Saugkanüle 24 saugt das lose oder zusammengepresste Pulver 21 bei einer Vorwärtsbewegung der Kanüle 24 in den Kanal 14 hinein ab.

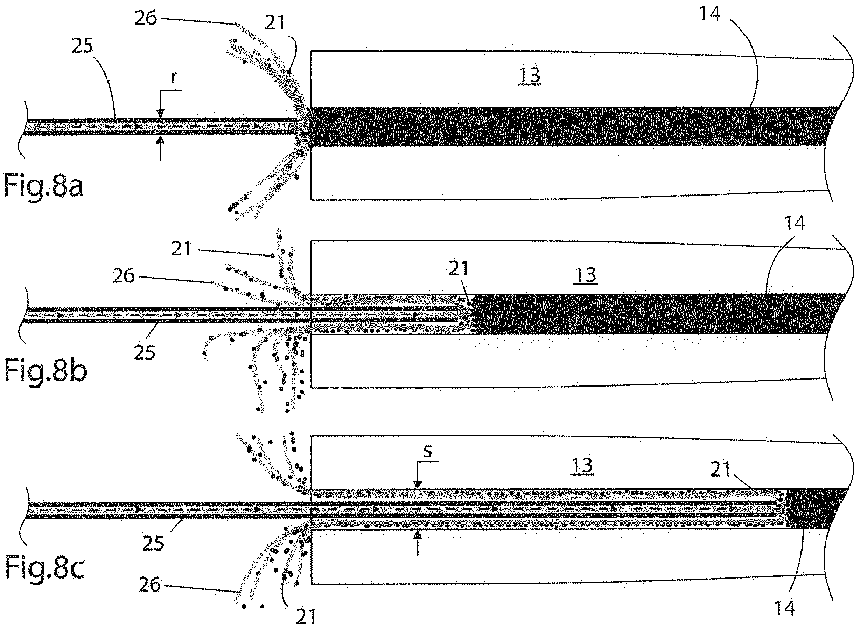

Und ebenso prinzipiell kann statt Druckluft oder Saugluft (Unterdruck) eine Flüssigkeit 26 verwendet werden, welche mittels einer Kanüle 25 unter Druck als Druckflüssigkeit in den Kanal 14 gepresst wird, was in den Figuren 8a bis 8c gezeigt ist. Auf diese Weise wird das lose Pulver zusammen mit der Flüssigkeit 26 aus dem Kanal 14 durch die wenigstens eine Kanalöffnung ausgeschwemmt. Als Druckflüssigkeit kann Wasser verwendet werden.

Des Weiteren kann die Länge der Kanüle gleich oder wenig kürzer als die Länge des Kanals innerhalb des Bügelrohlings sein, was den Figuren 5c, 7c und 8c letztlich zu entnehmen ist. Aus diesen Figuren ist zu entnehmen, dass die dort gezeigte jeweilige Kanüle 16, 24 und 25 schon tief in den jeweiligen Kanal 14 eingefahren ist. In den Figuren 5c, 7c und 8c ist des Weiteren gezeigt, dass die jeweilige Kanüle noch mit einer beträchtlichen Länge in die Eintrittsöffnung des Kanals 14 - und somit in den Kanal 14 - einfahren kann, wenigstens noch ein Drittel derjenigen Länge, die in den Kanal 14 schon eingefahren ist. Schließlich ist in den genannten Figuren 5c, 7c und 8c die gezeigte, jeweilige 16, 24 und 25 Kanüle links in den genannten Figuren abgeschnitten und das Ende ist durch eine Tilde [~] angedeutet, was heißt, dass die jeweilige Kanüle 16, 24 und 25 sich in gleicher Ausgestaltung, wie in den Zeichnungen 5c, 7c und 8c gezeigt, noch nach links fortsetzen kann. Eine Kanülenlänge über die Länge des Kanals hinaus macht natürlich keinen Sinn. Der Kanal hat über seine gesamte Länge vorzugsweise einen gleichbleibenden lichten Durchmesser, was aus sämtlichen Figuren ersichtlich ist.

### Bezugszeichenliste

- 1: Bügelrohlinge bzw. spätere Brillenbügel
- 2: Kanal innerhalb der Bügelrohlinge
- 3: Aufnahmeöffnung für ein im Bügel stirnseitig angeordnetes Gelenkenteil eines Brillengelenkes
- 4: Kanalöffnung
- 5: Verschlüsse des Kanals entweder an dem Ohr entfernt oder benachbart liegenden Ende des Bügelrohlings
- 6: Längsachse der Bügelrohlinge
- 7: Bügelrohlinge bzw. spätere Brillenbügel
- 8: Verschlüsse des Kanals entweder an dem Ohr entfernt oder benachbart liegenden Ende des Bügelrohlings
- 9: Bügelrohlinge bzw. spätere Brillenbügel
- 10: Kanal innerhalb der Bügelrohlinge
- 11: Verschlüsse des Kanals entweder an dem Ohr entfernt oder benachbart liegenden Ende des Bügelrohlings
- 12: Verschlüsse des Kanals entweder an dem Ohr entfernt oder benachbart liegenden Ende des Bügelrohlings
- 13: Bügelrohlinge bzw. spätere Brillenbügel
- 14: Kanal innerhalb der Bügelrohlinge
- 15: Spitze der Seele
- 16: Blaskanüle für Druckluft
- 17: Bügelrohlinge bzw. spätere Brillenbügel
- 18: Kanal innerhalb der Bügelrohlinge
- 19: Stirnfläche des Bügelrohlings
- 20: Seele, entweder Metallkern oder -draht oder Kunststoffkern
- 21: Pulver des Herstellungssubstrats, entweder lose oder zusammengepresst
- 22: Kanalöffnung
- 23: Dekoratives Ende der Seele, vorzugsweise an dem dem Ohr benachbart liegenden Ende des Bügelrohlings
- 24: Saugkanüle
- 25: Kanüle für eine Druckflüssigkeit
- 26: Flüssigkeit
- r: Durchmesser der Blas- oder Saugkanüle für Druckluft oder Unterdruck oder Durchmesser der Kanüle für eine Druckflüssigkeit
- s: Lichter Innendurchmesser des Kanals
- s>r: Der lichte Innendurchmesser des Kanals ist immer größer als der äußere Durchmesser der Kanüle

## Patentansprüche

1. Verfahren zum Herstellen von Brillenbügeln (1,7,9,13,17) mit einer Seele (20), wie Metall- oder Kunststoffkern, wobei die Rohlinge (1,7,9,13,17) der Brillenbügel in einem additiven Herstellungsprozess, wie z. B. Selektives Laser Sintern (SLS), unter Verwendung eines hierfür geeigneten Kunststoffes in Form eines Pulvers (21) als Herstellungssubstrat hergestellt ("gedruckt") werden, wobei während des Herstellungsprozesses (Druckprozess) des Bügelrohlings innerhalb desselben ein länglicher Kanal (2,10,14,18) längs der Längsachse des Bügelrohlings eingeformt (mitgedruckt) wird, wobei das während des Herstellungsprozesses des Kanals innerhalb desselben herstellungsbedingt verbleibende lose Pulver aus dem Kanal entfernt wird und anschließend, nach dem Befreien des Kanals des Bügelrohlings von losem Pulver, die Seele in den Kanal eingeführt, zum Beispiel eingeschossen, wird, **dadurch gekennzeichnet,**
**dass** das Entfernen des losen Pulvers durch Ausblasen des Kanals (2,10,14,18) mittels Druckluft erfolgt, wobei zum Ausblasen des Kanals (2,10,14,18) mittels Druckluft eine Einrichtung verwendet wird, auf die eine Blaskanüle (16) aufgesetzt ist, deren äußerer Durchmesser (r) geringer ist, als die lichte Weite (s) des Kanals (2,10,14,18), somit s>r, so dass die Blaskanüle (16) in den Kanal (2,10,14) einfahren kann und die Druckluft durch die in den Kanal einfahrende Blaskanüle (16,24) eingeleitet wird und die Druckluft beim Ausströmen aus dem Kanal das lose Pulver mitnimmt.

2. Verfahren zum Herstellen von Brillenbügeln (1,7,9,13,17) mit einer Seele (20), wie Metall- oder Kunststoffkern, wobei die Rohlinge (1,7,9,13,17) der Brillenbügel in einem additiven Herstellungsprozess, wie z. B. Selektives Laser Sintern (SLS), unter Verwendung eines hierfür geeigneten Kunststoffes in Form eines Pulvers (21) als Herstellungssubstrat hergestellt ("gedruckt") werden, wobei während des Herstellungsprozesses (Druckprozess) des Bügelrohlings innerhalb desselben ein länglicher Kanal (2,10,14,18) längs der Längsachse des Bügelrohlings eingeformt (mitgedruckt) wird, und das während des Herstellungsprozesses des Kanals innerhalb desselben herstellungsbedingt verbleibende lose Pulver aus dem Kanal entfernt wird und anschließend, nach dem Befreien des Kanals des Bügelrohlings von losem Pulver, die Seele in den Kanal eingeführt, zum Beispiel eingeschossen wird, **dadurch gekennzeichnet,**
**dass** zum Entfernen des losen Pulvers (21) aus dem Kanal (2,10,14,18) entweder eine Einrichtung verwendet wird, welche Unterdruck erzeugt, auf die eine Saugkanüle (24) für Luft aufgesetzt wird, deren äußerer Durchmesser (r) geringer ist, als die lichte Weite (s) des Kanals (2,10,14,18), somit s>r, so dass die Saugkanüle (24) bei einer Vorwärtsbewegung der Saugkanüle (24) in den Kanal (2,10,14) einfährt und das im Kanal (2,10,14,18) befindliche lose Pulver (21) durch die Saugluft aus dem Kanal (2,10,14,18) abgesaugt wird oder dass die Einrichtung eine solche zur Erzeugung einer Druckflüssigkeit (26) ist, auf die eine Kanüle für Flüssigkeit aufgesetzt ist, deren äußerer Durchmesser (r) geringer ist, als die lichte Weite (s) des Kanals (2,10,14,18), wobei die Druckflüssigkeit durch die Kanüle (25) in den Kanal (2,10,14) eingeleitet wird und das innerhalb desselben verbliebene lose Pulver (21) ausgeschwemmt wird.

3. Verfahren nach Anspruch 1 oder 2, **dadurch gekennzeichnet, dass** als Blas- oder Saug- oder Druckflüssigkeitskanüle (16, 24, 25) eine flexible Kanüle verwendet wird, welche während ihres Einführens in den Kanal (2,10,14,18) des Bügelrohlings (1,7,9,13,17) und während des Ausblas- oder Absaug- oder Ausspülvorgangs der Krümmung des Kanals zu folgen imstande ist.

4. Verfahren nach Anspruch 1 oder 2 oder 3,
**dadurch gekennzeichnet, dass** das Ende der Seele (20), mit welchem diese in den Kanal (2,10,14,18) eingeführt wird, eine Spitze (15) aufweist und während ihres Einbringens in den Kanal (2,10,14,18) um ihre eigene Längsachse schraubenartig gedreht wird.

5. Verfahren nach Anspruch 1 oder 2, zur Realisierung des Einsetzens der Seele in den Bügelrohling, **dadurch gekennzeichnet, dass** der Kanal entweder an dem dem Ohr abgewandten Ende des Bügelrohlings (1,7,9,13,17) offenbleibend eingeformt wird mit einem Verschluss (5,11,12,15) des Kanals (2,10,14,18) am entgegengesetzten Ende des Bügelrohlings (1,7,9,13,17) oder
an dem dem Ohr zugewandten Ende offenbleibend eingeformt wird mit einem Verschluss (5,11,12,15) am entgegengesetzten Ende des Bügelrohlings (1,7,9,13,17) oder an beiden Enden offenbleibend eingeformt wird oder
an beiden Enden mittels je eines Verschlusses (5,11,12,15) aus dem Herstellungssubstrat verschlossen bleibend eingeformt wird und
anschließend in den gemäß einem der Merkmale a) oder b) oder c) hergestellten Kanal (2,10,14,18) entweder durch dessen vorderes oder hinteres Ende die Seele (20) in den Kanal (2,10,14,18) eingebracht wird oder bei einem gemäß Merkmal d) hergestellten Kanal (2,10,14,18) wenigstens einer der Verschlüsse (5,11,12,15) entfernt wird und danach die Seele (20) in den Kanal (2,10,14,18) entweder von dem dem Ohr abgewandten oder von dem dem Ohr benachbarten Ende des Bügelrohlings (1,7,9,13,17) durch eine der Kanalöffnungen (4,22) in den Kanal (2,10,14,18) eingebracht wird, wobei bei Bügelrohlingen, die gemäß einem der kennzeichnenden Merkmale a) oder b) oder c) hergestellt worden sind und die einem Färbeprozess unterworfen werden sollen, die wenigstens eine Kanalöffnung oder beide vor dem Färben verschlossen werden und erst nach dem Färben mindestens einer der Verschlüsse entfernt wird, das Ausblasen oder Aussaugen oder Ausschwemmen des Kanals von losem Pulver erfolgt und anschließend die Seele in den Kanal eingesetzt wird oder wobei bei Bügelrohlingen, die gemäß dem kennzeichnenden Merkmal d) hergestellt worden sind und danach einem Färbeprozess unterworfen werden erst nach dem Färben mindestens einer der Verschlüsse entfernt wird, das Ausblasen oder Aussaugen oder Ausschwemmen des Kanals von losem Pulver erfolgt und anschließend die Seele in den Kanal eingebracht wird.

## Claims

1. Method for the production of spectacle temples (1, 7, 9, 13, 17) with an inner core (20), such as a metal or synthetic material core, wherein the blanks (1, 7, 9, 13, 17) of the spectacle temples (1, 7, 9, 13, 17) are produced ("printed") utilizing an additive production process, such as, for example, selective laser sintering (SLS) employing a synthetic material suitable for this purpose in the form of a powder (21) as the production substrat, wherein during the production process (printing process) of the temple blank an elongated channel (2, 10, 14, 18) is formed (printed jointly) therewithin along the longitudinal axis of the temple blank, wherein the loose powder (21), remaining conditional of production within the channel (2, 10, 14, 18) during the production process of the same, is removed from the channel (2, 10, 14, 18) and subsequently, after the channel (2, 10, 14, 18) of the temple blank is freed of loose powder (21), the inner core (20) is inserted, for example injected, into the channel (2, 10, 14, 18),
**characterized in**
**that** the removal of the loose powder takes place by purging the channel (2, 10, 14, 18) by means of compressed air, wherein for the purging of the channel (2, 10, 14, 18) by means of compressed air a device is deployed onto which is fitted a spout cannula (16) whose outer diameter (r) is less than the inside width (s) of the channel (2, 10, 14, 18), thus s > r, such that the spout cannula (16) can advance into the channel (2, 10, 14, 18) and the compressed air can be introduced through the spout cannula (16, 24) advancing into the channel (2, 10, 14, 18) and the compressed air during its flow out of the channel (2, 10, 14, 18) entrains the loose powder (21).

2. Method for the production of spectacle temples (1, 7, 9, 13, 17) with an inner core (20), such as a metal or synthetic material core, wherein the blanks (1, 7, 9, 13, 17) of the spectacle temples (1, 7, 9, 13, 17) are produced ("printed") utilizing an additive production process, such as, for example, selective laser sintering (SLS), employing a synthetic material suitable for this purpose in the form of a powder (21) as the production substrate, wherein during the production process (printing process) of the temple blank an elongated channel (2, 10, 14, 18) is formed (printed jointly) therewithin along the longitudinal axis of the temple blank and the loose powder (21), remaining during the production process conditional of manufacturing within the channel (2, 10, 14, 18) is removed from the channel (2, 10, 14, 18) and subsequently, after the channel (2, 10, 14, 18) of the temple blank is freed of loose powder (21), the inner core (20) is inserted, for example injected, into the channel (2, 10, 14, 18),
**characterized in**
**that** for the removal of the loose powder (21) from the channel (2, 10, 14, 18) either a device that generates negative pressure is utilized onto which a spout cannula (24) for air is fitted whose outer diameter (r) is less than the inner width (s) of the channel (2, 10, 14, 18), thus s > r, such that during the forward movement of the spout cannula (24) the spout cannula (24) advances into the channel (2, 10, 14, 18) and the loose powder (21) within the channel (2, 10, 14, 18) is exhausted through the vacuum air out of the channel (2, 10, 14, 18) or that the device is such as intended for the generation of a pressure fluid (26) onto which device is fitted a cannula for fluids, whose outer diameter (r) is less than the inside width (s) of the channel (2, 10, 14, 18), wherein the pressure fluid is introduced through the cannula (25) into the channel (2, 10, 14, 18) and the loose powder (21) remaining therewithin is flushed out.

3. Method as in claim 1 or 2, **characterized in that** a flexible cannula is utilized as the purging or exhaustion or pressure fluid cannula (16, 24, 25) which, during its insertion into the channel (2, 10, 14, 18) of the temple blank (1, 7, 9, 13, 17) and during the purging or exhaustion or flushing process is enabled to follow the curvature of the channel (2, 10, 14, 18).

4. Method as in claim 1 or 2 or 3,
**characterized in that** the end of the inner core (20) with which the same is inserted into the channel (2, 10, 14, 18) comprises a tip (15) and during its insertion into the channel (2, 10, 14, 18) is helically rotated about its own longitudinal axis.

5. Method as in claim 1 or 2 for the realization of the placement of the inner core (20) into the temple blank, **characterized in that** the channel (2, 10, 14, 18) is formed in such that it remains open at the end of the temple blank (1, 7, 9, 13, 17) facing away from the ear with a closure (5, 11, 12, 15) of the channel (2, 10, 14, 18) at the opposite end of the temple blank (1, 7, 9, 13, 17) or is formed in such that it remains open at the end facing the ear with a closure (5, 11, 12, 15) at the opposite end of the temple blank (1, 7, 9, 13, 17) or is formed in remaining open at both ends or is formed in such that it remains closed at both ends by means of one closure (5, 11, 12, 15) each of the production substrate and subsequently into the channel (2, 10, 14, 18), produced according to characteristic a) or b) or c), the inner core (20) is inserted either through its front or its rear end into the channel (2, 10, 14, 18) or, in the case of a channel (2, 10, 14, 18) produced according to characteristic d), at least one of the closures (5, 11, 12, 15) is removed and subsequently the inner core (20) is inserted into the channel (2, 10, 14, 18) either from the end facing away from the ear or from the end adjacent to the ear of the temple blank (1, 7, 9, 13, 17) through one of the channel openings (4, 22), wherein, in the case of temple blanks that had been produced according to one of the characterizing features a) or b) or c) and are intended to be subjected to a dyeing process, the at least one channel opening (4, 22) or both are closed before the dyeing and only after the dyeing at least one of the closures (5, 11, 12, 15) is removed, the purging or exhaustion of flushing of the channel of loose powder (21) takes place and subsequently the inner core (20) is set into the channel (2, 10, 14, 18) or wherein the temple blanks that had been produced according to the characterizing feature d) and subsequently are subjected to a dyeing process, only after the dyeing at least one of the closures (5, 11, 12, 15) is removed, the purging or exhaustion or flushing of the channel (2, 10, 14, 18) of loose powder (21) takes place and subsequently the inner core (20) is inserted into the channel (2, 10, 14, 18).

## Revendications

1. Procédé de fabrication de branches de lunettes (1, 7, 9, 13, 17) comprenant une âme (20), telle qu'un noyau en métal ou en matière synthétique, les ébauches (1, 7, 9, 13, 17) des branches de lunettes étant fabriquées (« imprimées ») dans un processus de fabrication additive, comme par exemple le frittage laser sélectif (SLS), à l'aide d'une matière synthétique appropriée se présentant sous la forme d'une poudre (21) comme substrat de fabrication, un canal allongé (2, 10, 14, 18) étant formé (imprimé conjointement) le long de l'axe longitudinal de l'ébauche de branche pendant le processus de fabrication (processus d'impression) de l'ébauche de branche à l'intérieur de celle-ci, la poudre libre, due à la fabrication, qui reste à l'intérieur du canal pendant le processus de fabrication de celui-ci étant retirée du canal puis, après que le canal de l'ébauche de branche a été débarrassé de la poudre libre, l'âme étant insérée, par exemple injectée, dans le canal,
**caractérisé en ce que**
l'élimination de la poudre libre est effectuée par soufflage d'air comprimé dans le canal (2, 10, 14, 18), un dispositif étant utilisé pour souffler de l'air comprimé dans le canal (2, 10, 14, 18) et une canule de soufflage (16), dont le diamètre extérieur (r) est inférieur à la largeur intérieure (s) du canal (2, 10, 14, 18), donc s > r, étant placée sur ledit dispositif de sorte que la canule de soufflage (16) puisse pénétrer dans le canal (2, 10, 14) et que l'air comprimé soit introduit par la canule de soufflage (16, 24) qui pénètre dans le canal et que l'air comprimé emporte la poudre libre avec lui lorsqu'il sort du canal.

2. Procédé de fabrication de branches de lunettes (1, 7, 9, 13, 17) comprenant une âme (20), tel qu'un noyau en métal ou en matière synthétique, les ébauches (1, 7, 9, 13, 17) des branches de lunettes étant fabriquées (« imprimées ») dans un processus de fabrication additive, comme par exemple le frittage laser sélectif (SLS), à l'aide d'une matière synthétique appropriée se présentant sous la forme d'une poudre (21) comme substrat de fabrication, un canal allongé (2, 10, 14, 18) étant formé (imprimé conjointement) le long de l'axe longitudinal de l'ébauche de branche pendant le processus de fabrication (processus d'impression) de l'ébauche de branche à l'intérieur de celle-ci, la poudre libre, due à la fabrication, qui reste à l'intérieur du canal pendant le processus de fabrication de celui-ci étant retirée du canal puis, après que le canal de l'ébauche de branche a été débarrassé de la poudre libre, l'âme étant insérée, par exemple injectée, dans le canal,
**caractérisé en ce que**, pour retirer la poudre libre (21) du canal (2, 10, 14, 18), on utilise un dispositif générateur de dépression sur lequel est placée une canule d'aspiration (24), destinée à l'air, dont le diamètre extérieur (r) est inférieur à la largeur intérieure (s) du canal (2, 10, 14, 18), donc s > r, de sorte que la canule d'aspiration (24) pénètre dans le canal (2, 10, 14) lorsque la canule d'aspiration (24) avance et la poudre libre (21) se trouvant dans le canal (2, 10, 14, 18) est aspirée hors du canal (2, 10, 14, 18) par l'air d'aspiration, ou bien **en ce que** le dispositif est un dispositif générateur de liquide sous pression (26) sur lequel est placée une canule, destinée à un liquide, dont le diamètre extérieur (r) est inférieur à la largeur intérieure (s) du canal (2, 10, 14, 18), le liquide sous pression étant introduit dans le canal (2, 10, 14) par le biais de la canule (25) et la poudre libre (21) qui reste à l'intérieur de celle-ci étant chassée.

3. Procédé selon la revendication 1 ou 2, **caractérisé en ce qu'**une canule flexible est utilisée comme canule de soufflage ou d'aspiration ou de liquide sous pression (16, 24, 25), qui lors de son insertion dans le canal (2, 10, 14, 18) de l'ébauche de branche (1, 7, 9, 13, 17) est en mesure de suivre la courbure du canal pendant le processus de soufflage ou d'aspiration ou de rinçage.

4. Procédé selon la revendication 1 ou 2 ou 3, **caractérisé en ce que** l'extrémité de l'âme (20) avec laquelle celle-ci est insérée dans le canal (2, 10, 14, 18) comporte une pointe (15) et, lorsque ladite pointe est insérée dans le canal (2, 10, 14, 18), ladite extrémité est tournée comme par vissage sur son propre axe longitudinal.

5. Procédé selon la revendication 1 ou 2, de réalisation de l'insertion de l'âme dans l'ébauche de branche, **caractérisé en ce que** le canal soit est formé de manière à rester ouvert, à l'extrémité de l'ébauche de branche (1, 7, 9, 13, 17) côté opposé à l'oreille, avec une fermeture (5, 11, 12, 15) du canal (2, 10, 14, 18) à l'extrémité opposée de l'ébauche de branche (1, 7, 9, 13, 17) ou à l'extrémité côté oreille, ou est formé, de manière à rester ouvert, avec une fermeture (5, 11, 12, 15) à l'extrémité opposée de l'ébauche de branche (1, 7, 9, 13, 17) ou aux deux extrémités ou est formé, de manière à rester fermé, à partir du substrat de fabrication aux deux extrémités pourvues chacune d'une fermeture (5, 11, 12, 15) puis l'âme (20) est introduite dans le canal (2, 10, 14, 18) par son extrémité avant ou arrière, dans le cas du canal (2, 10, 14, 18) réalisé selon l'une des caractéristiques a), b) et c) ou l'une au moins des fermeture (5, 11, 12, 15) est retirée dans le cas d'un canal (2, 10, 14, 18) réalisé selon la caractéristique d) puis l'âme (20) est introduite dans le canal (2, 10, 14, 18) depuis l'extrémité de l'ébauche de branche (1, 7, 9, 13, 17) qui est opposée à l'oreille ou qui est adjacente à l'oreille, par une des ouvertures (4, 22) ménagées dans le canal (2, 10, 14, 18), dans le cas d'ébauches de branche qui ont été fabriquées selon l'une des caractéristiques a), b) et c) et qui doivent être soumises à un processus de coloration, l'au moins une ouverture de canal ou les deux étant fermées avant la coloration et au moins une des fermetures n'étant retirée qu'après la coloration, le soufflage ou l'aspiration ou le rinçage de la poudre libre du canal étant effectué(e) puis l'âme étant insérée dans le canal ou, dans le cas d'ébauches de branches qui ont été fabriquées selon la caractéristique d) et qui sont ensuite soumises à un processus de coloration, au moins une des fermetures n'étant retirée qu'après la coloration , le soufflage ou l'aspiration ou le rinçage de la poudre libre du canal étant effectué(e) puis l'âme étant introduite dans le canal.
